# EUROPEAN PATENT APPLICATION

(11) **EP 4 398 512 A1**
(43) Date of publication of application: **10.07.2024**
(21) Application number: 22874484.3
(22) Date of filing: 22.08.2022
(51) Int. Cl.: H04L 9/32, G06F 21/00

(54) **METHOD FOR AUTHENTICATING ELECTRONIC PART, AND TERMINAL AND ELECTRONIC PART**

(30) Priority: 29.09.2021 CN 202111147818
(71) Applicant: Huawei Technologies Co., Ltd., Shenzhen, Guangdong 518129 (CN)
(72) Inventor: OU, Gangyan, Shenzhen, Guangdong 518129 (CN); CHU, Chao, Shenzhen, Guangdong 518129 (CN); LI, Zhen, Shenzhen, Guangdong 518129 (CN)
(74) Representative: Goddar, Heinz J.
(86) International application number: PCT/CN2022/113835
(87) International publication number: WO 2023/051090

(57) **Abstract**

This application provides an authentication method for an electronic part, a terminal, and an electronic part. The method includes: obtaining a digital certificate from an electronic part when it is detected that the electronic part gets access for the first time; performing authentication on the digital certificate; sending a first credential to the electronic part when the authentication on the digital certificate succeeds, where the first credential includes an encrypted second credential; obtaining the second credential from the electronic part when it is detected that the electronic part gets access again, where the second credential is obtained based on the first credential; and performing authentication on the electronic part based on the second credential. Compared with that of the authentication based on the digital certificate, an authentication process of the second credential is greatly simplified. This can shorten authentication time and improve authentication efficiency, so that the electronic part can be quickly authenticated and the electronic part can be enabled when the authentication succeeds.

## Description

This application claims priority to Chinese Patent Application No. 202111147818.2, filed with the China National Intellectual Property Administration on September 29, 2021 and entitled "AUTHENTICATION METHOD FOR ELECTRONIC PART, TERMINAL, AND ELECTRONIC PART", which is incorporated herein by reference in its entirety.

### TECHNICAL FIELD

This application relates to the field of electronic part control and management, and more specifically, to an authentication method for an electronic part, a terminal, and an electronic part.

### BACKGROUND

Electronic parts have great economic benefits in a process of repair and maintenance. However, during maintenance, there may be a phenomenon of replacing quality goods with shoddy goods, for example, replacing an original electronic part with a counterpart of another competitor or a faulty counterpart. This may compromise electronic part performance.

Currently, in a known technology, a terminal performs authentication on an electronic part by using a digital certificate preset in a chip production process of the electronic part. Specifically, when detecting access of the electronic part, the terminal first performs authentication on the digital certificate of the electronic part, and enables a function and a service of the electronic part only after the authentication succeeds. In addition, the digital certificate needs to be authenticated each time the electronic part is started. However, digital certificate authentication is a complex process and consumes long time.

For example, for a vehicle, the vehicle may perform digital certificate authentication on an electronic part of the vehicle. However, if each electronic part needs to wait for a time-consuming authentication process during a start-up, a start-up of the vehicle is quite slow, and therefore authentication cannot be performed on the electronic part of the vehicle when the vehicle is started.

### SUMMARY

This application provides an authentication method for an electronic part, a terminal, and an electronic part, to simplify an authentication process of the electronic part, so that the electronic part can quickly complete authentication when the terminal is started.

According to a first aspect, this application provides an authentication method for an electronic part. The method may be performed by a terminal, or may be performed by a part (like a chip or a chip system) deployed in a terminal. This is not limited in this application. The following is merely an example, and the method provided in the first aspect is described by using a terminal as an execution body.

For example, the method includes: obtaining a digital certificate from an electronic part when it is detected that the electronic part gets access for the first time; performing authentication on the digital certificate; sending a first credential to the electronic part when the authentication on the digital certificate succeeds, where the first credential includes an encrypted second credential; obtaining the second credential from the electronic part when it is detected that the electronic part gets access again, where the second credential is obtained based on the first credential; and performing authentication on the electronic part based on the second credential.

Based on the foregoing technical solution, the terminal may deliver the first credential to the electronic part after the electronic part gets access for the first time and completes the authentication, so that the electronic part obtains the second credential based on the first credential. When the electronic part gets access again, digital certificate authentication does not need to be performed on the electronic part again, and is replaced by the authentication on the second credential. Compared with that of authentication based on the digital certificate, the authentication process of the second credential is greatly simplified. This can shorten authentication time and improve authentication efficiency. Therefore, the electronic part can quickly complete authentication when the terminal is started.

With reference to the first aspect, in some possible implementations of the first aspect, the first credential is obtained by encrypting an identity and a first key, the identity is used to identify the electronic part, the first key is used to encrypt the identity; and the second credential includes an encrypted identity obtained by encrypting the identity based on the first key.

When the authentication performed by the terminal on the digital certificate succeeds, the first credential sent to the electronic part may be the encrypted identity and the first key, so that the electronic part encrypts the identity based on the first key to obtain the encrypted identity, that is, generates the second credential, and the encrypted identity is used to perform authentication by using the identity when the electronic part gets access again. In other words, in a possible implementation, the second credential may include the encrypted identity, so that the terminal performs authentication on the electronic part when detecting that the electronic part gets access again. Compared with that of authentication based on the digital certificate, an authentication process of the identity is greatly simplified. This shortens authentication time and improves authentication efficiency.

With reference to the first aspect, in some possible implementations of the first aspect, the performing authentication on the electronic part based on the second credential includes: decrypting the encrypted identity by using the first key, to obtain the identity; performing authentication on the electronic part based on the identity obtained through decryption and a locally stored identity; and enabling the electronic part when the authentication on the electronic part succeeds; or prohibiting enabling the electronic part when the authentication on the electronic part fails.

When the electronic part accesses the terminal again, after decrypting the encrypted identity by using the first key, the terminal compares the identity with the local identity. If the authentication succeeds, the electronic part is enabled; otherwise, the electronic part is prohibited enabling. This simplifies an authentication process and shortens authentication time, so that the electronic part quickly completes authentication, and the electronic part is enabled when the authentication succeeds.

Optionally, the identity includes a token (Token) or a certificate serial number (serial number, SN) of the digital certificate.

Optionally, the token includes a decentralized identity (decentralized identity, DID) and the certificate SN of the digital certificate.

With reference to the first aspect, in some possible implementations of the first aspect, the identity includes the token; when the authentication on the electronic part succeeds, the token is updated to obtain an updated token, where the updated token is used to perform authentication on the electronic part when the electronic part gets access next time; the updated token is encrypted by using the first key to obtain an encrypted updated token; and the encrypted updated token is sent to the electronic part.

When the authentication on the electronic part succeeds, the token is updated, and the updated token is encrypted. By continuously updating the token, a risk of token leakage is reduced, and security is improved.

With reference to the first aspect, in some possible implementations of the first aspect, the method is applied to the terminal, the first key corresponds to the terminal, and first keys allocated by a same terminal to different electronic parts are a same first key.

It may be understood that, if each electronic part corresponds to one first key, the terminal needs to store a large quantity of first keys, and first keys allocated by a same terminal to different electronic parts are the same, and only one first key needs to be stored. This saves storage space.

With reference to the first aspect, in some possible implementations of the first aspect, the method is applied to the terminal, the first key corresponds to the electronic part, and first keys allocated by a same terminal to different electronic parts are different first keys.

When storage space is large, different first keys may be allocated to different electronic parts, that is, each electronic part corresponds to one first key, and a first key corresponding to one electronic part cannot encrypt or decrypt an identity of another electronic part, thereby improving security.

With reference to the first aspect, in some possible implementations of the first aspect, the sending a first credential to the electronic part when the authentication on the digital certificate succeeds includes: negotiating with the electronic part about a session key (session key, SK) when the authentication on the digital certificate succeeds, where the SK is used for encryption and decryption of data transmission; encrypting, based on the SK, an identity and a first key allocated to the electronic part, to obtain the first credential; and sending the first credential to the electronic part.

When the electronic part accesses the terminal for the first time, if the authentication on the digital certificate succeeds, the terminal encrypts the identity and the first key by using the SK negotiated with the electronic part, to obtain the first credential, and sends the first credential to the electronic part, so that the electronic part obtains the second credential based on the first credential, and may use the second credential when the electronic part gets access next time. This simplifies an authentication process when the electronic part gets access again, shortens authentication time, and improves authentication efficiency.

With reference to the first aspect, in some possible implementations of the first aspect, the performing authentication on the digital certificate includes: determining, based on a certificate serial number of a revoked digital certificate, whether the digital certificate of the electronic part is revoked. When the digital certificate of the electronic part is revoked, the terminal determines that the authentication on the digital certificate of the electronic part fails. The certificate serial number of the revoked digital certificate comes from a public key infrastructure (public key infrastructure, PKI) server, the revoked digital certificate is determined based on a check result of a plurality of logs including a log of the electronic part, and each of the plurality of logs includes a certificate serial number of one digital certificate and use time of the certificate serial number.

The terminal may determine, by comparing the certificate SN of the digital certificate of the electronic part with the certificate SN of the revoked digital certificate, whether the digital certificate of the electronic part is revoked. If the digital certificate of the electronic part is revoked, the authentication performed by the terminal on the digital certificate of the electronic part fails. In other words, the terminal no longer sends the first credential to the electronic part. This can effectively prevent the digital certificate from being forged, so that ecological control can be effectively performed on the electronic part.

The revoked digital certificate may be determined based on the check result of the plurality of logs including the log of the electronic part, and each of the plurality of logs includes a certificate serial number of one digital certificate and use time of the certificate serial number. Specifically, a vehicle cloud may receive a plurality of logs of a plurality of electronic parts. Based on the plurality of logs, the vehicle cloud determines a revoked digital certificate, and sends a certificate SN of the revoked digital certificate to the PKI server. The PKI server further releases the certificate SN to the terminal.

With reference to the first aspect, in some possible implementations of the first aspect, the revoked digital certificate includes a plurality of digital certificates that have a same certificate serial number and have at least partially overlapped use time.

The vehicle cloud determines whether certificate SNs of digital certificates in the plurality of logs are the same. If there are two same certificate SNs of digital certificates, and use time of the same certificate SNs overlaps, the digital certificate having the certificate SN is revoked. In this way, the certificate is prevented from being forged, and ecological control can be effectively performed on the electronic part.

Optionally, the digital certificate is preset in the electronic part, or the digital certificate is generated by the electronic part based on a digital signature obtained from the PKI server.

According to a second aspect, this application provides an authentication method for an electronic part. The method may be performed by an electronic part, or may be performed by a part (like a chip or a chip system) deployed in an electronic part. This is not limited in this application. The following is merely an example, and the method provided in the second aspect is described by using an electronic part as an execution body.

For example, a digital certificate is sent to a terminal when the terminal is accessed for the first time; a first credential is received from the terminal, where the first credential includes an encrypted second credential; and the second credential is sent to the terminal when the terminal is accessed again, where the second credential is obtained based on the first credential.

Based on the foregoing technical solution, after the electronic part accesses the terminal for the first time and completes the authentication, the electronic part may receive the first credential, and obtain the second credential based on the first credential. When the electronic part accesses the terminal again, the authentication on the digital certificate does not need to be performed again, but the second credential is sent for authentication. It can be seen that, compared with that of authentication based on the digital certificate, the authentication process of the second credential is greatly simplified. This can shorten authentication time. In addition, the electronic part only needs to perform encryption and decryption in the authentication process of the second credential, and does not need to perform excessive calculation. Furthermore, the process may be accelerated and completed through hardware, so that the electronic part quickly completes authentication.

With reference to the second aspect, in some possible implementations of the second aspect, the first credential is obtained by encrypting an identity and a first key, the identity is used to identify the electronic part, and the first key is used to encrypt the identity; and the second credential includes an encrypted identity obtained by encrypting the identity based on the first key.

The first credential received by the electronic part may be the encrypted identity and the first key, so that the electronic part encrypts the identity based on the first key to obtain the encrypted identity, that is, generates the second credential. When the electronic part gets access again, the second credential is sent to the terminal for authentication. In other words, in a possible implementation, the second credential may include the encrypted identity, so that the terminal performs authentication on the electronic part when detecting that the electronic part gets access again. Compared with that of the authentication based on the digital certificate, an authentication process of the identity is greatly simplified. This shortens authentication time and improves authentication efficiency.

With reference to the second aspect, in some possible implementations of the second aspect, that the second credential is sent to the terminal when the terminal is accessed again includes: decrypting the first credential to obtain the identity and the first key; encrypting the identity by using the first key to obtain the encrypted identity; and sending the encrypted identity, where the encrypted identity is used by the terminal to perform authentication on the electronic part.

After receiving the first credential, the electronic part decrypts the first credential to obtain the identity and the first key, encrypts the identity by using the first key to obtain the encrypted identity, and sends the encrypted identity to the terminal, so that the terminal performs authentication on the electronic part. The electronic part only needs to perform encryption and decryption, and does not need to perform excessive calculation, thereby reducing a computing power requirement of the electronic part.

With reference to the second aspect, in some possible implementations of the second aspect, the decrypting the first credential to obtain the identity and the first key includes: negotiating with the terminal about an SK, where the SK is used for encryption and decryption of data transmission; and decrypting the first credential based on the SK, to obtain the identity and the first key.

The electronic part decrypts the first credential by using the negotiated SK, to obtain the identity and the first key, so as to perform authentication when the electronic part accesses an authentication platform again. The negotiated SK is used to encrypt and decrypt the identity and the first key, thereby reducing a risk of leakage of the identity and the first key, and improving security. In addition, when the electronic part gets access again, only encryption and decryption need to be performed, and excessive calculation does not need to be performed.

Optionally, the identity includes a token or a certificate SN of the digital certificate.

Optionally, the token includes a DID and the certificate SN of the digital certificate.

With reference to the second aspect, in some possible implementations of the second aspect, the identity includes the token, and the method further includes: receiving an encrypted updated token from the terminal, where the encrypted updated token is obtained by encrypting an updated token based on the first key, and the updated token is used by the terminal to perform authentication on the electronic part when the electronic part accesses the terminal next time; and decrypting the encrypted updated token based on the first key, to obtain the updated token.

When the electronic part accesses the terminal again, if the authentication succeeds, the electronic part receives the encrypted updated token from the terminal, and decrypts the token by using the first key, so that the electronic part performs authentication by using the updated token when accessing the terminal next time, and security is improved by continuously updating the token.

Optionally, the digital certificate is preset in the electronic part, or the digital certificate is generated by the electronic part based on a digital signature obtained from a PKI server.

According to a third aspect, this application provides a terminal, including units configured to implement the method according to one of the first aspect or the possible implementations of the first aspect. It should be understood that each unit may implement a corresponding function by executing a computer program.

Optionally, the terminal is a vehicle. The vehicle includes units configured to implement the method according to any one of the first aspect or the possible implementations of the first aspect. It should be understood that each unit may implement a corresponding function by executing a computer program.

According to a fourth aspect, this application provides a terminal, including a processor. The processor is configured to perform the authentication method for an electronic part according to any one of the first aspect or the possible implementations of the first aspect.

The terminal may further include a memory, configured to store program instructions and data. The memory is coupled to the processor. When the processor executes the instructions stored in the memory, the method described in the foregoing aspects may be implemented. The terminal further includes a communication interface. The communication interface is used by the apparatus to communicate with another device. For example, the communication interface may be a transceiver, a circuit, a bus, a module, or another type of communication interface.

According to a fifth aspect, this application provides an electronic part, including units configured to implement the method according to any one of the second aspect or the possible implementations of the second aspect. It should be understood that each unit may implement a corresponding function by executing a computer program.

According to a sixth aspect, this application provides an electronic part, including a processor. The processor is configured to perform the authentication method for a vehicle electronic part according to any one of the second aspect or the possible implementations of the second aspect.

The electronic part may further include a memory, configured to store instructions and data. The memory is coupled to the processor. When the processor executes the instructions stored in the memory, the method described in the foregoing aspects may be implemented. The electronic part may further include a communication interface. The communication interface is used by the apparatus to communicate with another device. For example, the communication interface may be a transceiver, a circuit, a bus, a module, or another type of communication interface.

According to a seventh aspect, this application provides a computer-readable storage medium, including a computer program. When the computer program is run on a computer, the computer is enabled to implement the method according to any one of the first aspect and the second aspect and the possible implementations of the first aspect and the second aspect.

According to an eighth aspect, this application provides a computer program product. The computer program product includes a computer program (which may also be referred to as code or instructions). When the computer program is run, a computer is enabled to perform the method according to any one of the first aspect and the second aspect and the possible implementations of the first aspect and the second aspect.

It should be understood that the third aspect to the eighth aspect of this application correspond to the technical solutions of the first aspect and the second aspect of this application, and beneficial effects achieved by the aspects and the corresponding feasible implementations are similar. Details are not described again.

### BRIEF DESCRIPTION OF DRAWINGS

FIG. 1 is a schematic diagram of an application scenario applicable to a method according to an embodiment of this application;
FIG. 2 is a schematic diagram of a structure of a vehicle according to an embodiment of this application;
FIG. 3 is a schematic flowchart of an authentication method for an electronic part according to an embodiment of this application;
FIG. 4 is a schematic diagram of a specific process in which an authentication platform performs authentication for first access according to an embodiment of this application;
FIG. 5 is a schematic diagram of a specific process in which an authentication platform delivers a first credential according to an embodiment of this application;
FIG. 6A and FIG. 6B are a specific schematic flowchart of performing authentication on a second credential according to an embodiment of this application;
FIG. 7 is a schematic flowchart of determining whether a digital certificate is revoked according to an embodiment of this application;
FIG. 8 is a schematic diagram of an example of an authentication method for an electronic part according to an embodiment of this application;
FIG. 9 is a schematic block diagram of an authentication apparatus of an electronic part according to an embodiment of this application; and
FIG. 10 is another schematic block diagram of an authentication apparatus of an electronic part according to an embodiment of this application.

### DESCRIPTION OF EMBODIMENTS

The technical solutions in this application are described below with reference to the accompanying drawings.

In embodiments of this application, a terminal may be a terminal on land, including an indoor terminal, an outdoor terminal, a handheld terminal, a wearable terminal, or a vehicle-mounted terminal. Alternatively, the terminal may be a terminal (for example, a ship) on water. Alternatively, the terminal may be a terminal (for example, an airplane, a balloon, or a satellite) in the air. The terminal in embodiments of this application includes means of transport, like a vehicle, an airplane, or a ship, that can be on land, in the air, or on water, and further includes an electronic device, like a mobile phone, a tablet computer, a computer (like a notebook computer or a palmtop computer) with a wireless transceiver function, a mobile internet device (mobile internet device, MID), a virtual reality (virtual reality, VR) device, or an augmented reality (augmented reality, AR) device. It should be understood that the foregoing example of the terminal is merely an example, and should not constitute any limitation on embodiments of this application.

It should be noted that the following describes, by using a vehicle as an example, an authentication method for an electronic part provided in embodiments of this application.

In embodiments of this application, the electronic part may be a component, or may be a part including a plurality of components. It should be understood that the part may independently complete a function. A vehicle is used as an example. Electronic parts of the vehicle include but are not limited to: a motor control unit (motor control unit, MCU), a telematics box (telematics box, TBOX), a power distribution unit (power distribution unit, PDU), and the like.

The following uses a vehicle as an example to describe in detail a scenario to which an authentication method for an electronic part provided in embodiments of this application is applicable.

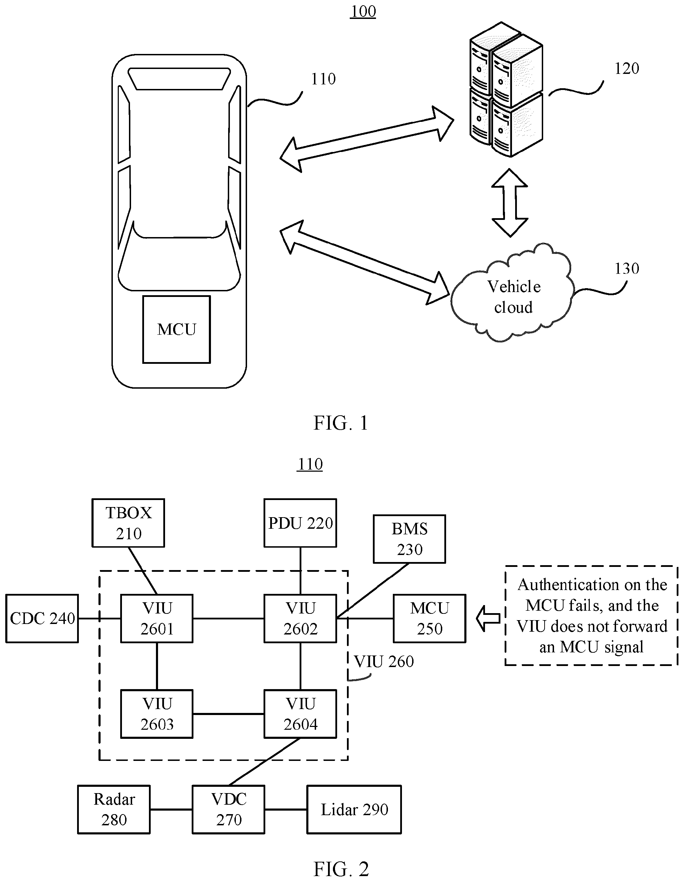

FIG. 1 is a schematic diagram of an application scenario applicable to a method according to an embodiment of this application. The following first briefly describes, with reference to FIG. 1, the application scenario applicable to the method provided in this application.

As shown in FIG. 1, the entire application scenario 100 includes: a vehicle 110, an electronic part MCU of the vehicle, a PKI server 120, and a vehicle cloud 130. The vehicle110 may perform data communication with the PKI server 120 and the vehicle cloud 130 by using a communication network, and the PKI server 120 may also perform data communication with the vehicle cloud 130 by using a communication network. The PKI server may be a device deployed on a cloud, may be a specific entity, or may be a part of function units of a large-scale cluster server. This is not limited in embodiments of this application. The communication network may be Bluetooth, wireless fidelity (wireless fidelity, Wi-Fi), a mobile cellular network, a dedicated local area network, or the like, provided that data exchange can be implemented. The vehicle cloud may be used to determine whether a digital certificate of an electronic part is revoked.

It should be understood that the vehicle shown in the figure is merely an example, and the vehicle may be any type of motor vehicle, for example, a truck, a lorry, or a car. It should be further understood that the vehicle 110 further has another replaceable electronic part, for example, a TBOX or a PDU.

Generally, electronic parts of the vehicle 110, such as the MCU, need routine repair and maintenance. A repair and maintenance process often brings great economic benefits. An original equipment manufacturer (original equipment manufacturer, OEM) can protect its interests by controlling a 4S store. However, if the vehicle is not maintained and repaired by the 4S store, or the OEM cannot control the 4S store, the interests of a back-end market of the electronic parts of the vehicle cannot be guaranteed. For example, in the process of repairing and replacing a part, an original electronic part may be replaced with an inferior part. If authenticity of the electronic part cannot be identified, the interests of the OEM cannot be guaranteed. In addition, performance of the electronic part cannot be guaranteed.

Currently, there is a technology in which authentication is performed on an electronic part by using a digital certificate preset in a chip production process of the electronic part. Specifically, a chip is integrated into the authenticated electronic part, and the digital certificate is preset in the chip in the production process. When the electronic part gets access, authentication is first performed on the digital certificate, and a function and a service of the electronic part are enabled only after the authentication succeeds. In addition, authentication needs to be performed on the digital certificate each time the electronic part is started. However, digital certificate authentication is a complex process and consumes long time. However, for a vehicle, if each electronic part needs to wait for a time-consuming authentication process during a start-up, a start-up of the vehicle is quite slow, and therefore authentication cannot be quickly performed on the electronic part when the vehicle is started.

Therefore, this application provides an authentication method for an electronic part. When an electronic part gets access for the first time, the terminal completes an authentication process for a digital certificate, and delivers a first credential, so that the electronic part obtains a second credential based on the first credential. When the electronic part gets access again, the terminal only needs to perform authentication on the second credential. Because an authentication process of the second credential is relatively simple and time-consuming, the electronic part can quickly complete authentication when the terminal is started, and a quick start-up of the terminal is not affected.

To better understand embodiments of this application, the following first briefly describes, with reference to FIG. 2, a structure of the vehicle 110 applicable to the authentication method provided in this application. FIG. 2 is a schematic diagram of the structure of the vehicle 110 according to an embodiment of this application.

As shown in FIG. 2, the vehicle 110 includes: a TBOX 210, a PDU 220, a battery management system (battery management system, BMS) 230, a cockpit domain controller (cockpit domain controller, CDC) 240, an MCU 250, a vehicle integrated unit (vehicle integrated unit, VIU) 260, a vehicle domain controller (vehicle domain controller, VDC) 270, a radar (radar) 280, and a lidar (lidar) 290.

The VIU 260 shown in FIG. 2 includes four VIUs: a VIU 2601, a VIU 2602, a VIU 2603 and a VIU 2604. The VIU 2601 is connected to the CDC 240 and the TBOX 210, the VIU 2602 is connected to the PDU 220, the BMS 230, and the MCU 250, and the VDC is connected to the radar 280 and the lidar 290. The VIU 260 and the VDC 270 may be used as authentication platforms to perform authentication on other electronic parts. For example, electronic parts connected to the VIUs are shown in the figure. For example, the VIU 2602 performs authentication on the electronic part MCU 250. If the authentication fails, the VIU 2602 does not forward a signal of the MCU 250, that is, the MCU 250 cannot be started normally, that is, a function and a service of the electronic part cannot be enabled. It may be understood that a quantity of VIUs shown in FIG. 2, a connection relationship between each VIU and an electronic part, and a connection relationship between each VIU and the VDC are merely examples, and should not constitute any limitation on embodiments of this application. For example, the PDU 220 and the BMS 230 may also be connected to the VIU 2601. This is not limited in embodiments of this application.

It should be understood that the foregoing electronic parts may be connected through a controller area network (controller area network, CAN) bus, a local interconnect network (local interconnect network, LIN) bus, a flex ray (flex ray) bus, a medium oriented system transport (media oriented systems transport, MOST) bus, and the like. The foregoing types of buses may be configured to transmit information between the parts. It should be further understood that, forms or formats of signals transmitted on different buses connected to the foregoing different parts may be different, and a gateway may convert the signals in different forms or formats, and then send the converted signals to a signal receiver. Herein, the gateway is only a name, and may also be replaced with another processor that can mutually convert signals of the foregoing parts.

It may be understood that the schematic structure in this embodiment of this application does not constitute any limitation on the vehicle 110. In some other embodiments, the vehicle 110 may include more or fewer parts than those shown in the figure, or some parts may be combined, or some parts may be split, or different part arrangements may be used. The parts shown in the figure may be implemented by hardware, software, or a combination of software and hardware.

To clearly describe the technical solutions in embodiments of this application, terms such as "first" and "second" are used in embodiments of this application to distinguish between same items or similar items that provide basically same functions or purposes. For example, a first key service and a second key service are used to distinguish key services in different electronic parts, and a sequence of the first key service and the second key service is not limited. A person skilled in the art may understand that the words such as "first" and "second" do not limit a quantity and an execution sequence, and that the words such as "first" and "second" do not indicate a definite difference.

With reference to the accompanying drawings, the following describes in detail an authentication method for an electronic part provided in embodiments of this application. It should be understood that, in the following embodiments, a specific process of the method is described from a perspective of interaction between an electronic part and an authentication platform, but shall not constitute any limitation on an execution body of the method. The method provided in embodiments of this application can be performed provided that a program that records code of the method provided in embodiments of this application can be run. This is not limited in embodiments of this application.

It should be understood that the authentication platform may be a platform that is deployed inside a terminal and that performs authentication on an electronic part, and may be specifically a controller inside a terminal or the like, to implement a function of authenticating an accessing electronic part. Because the authentication platform is deployed in the terminal, authentication performed by the authentication platform on the electronic part in the following solution may be considered as authentication performed by the terminal on the electronic part. For example, an authentication platform in a vehicle may be the VIU or the VDC shown in FIG. 2, and is deployed in the vehicle, to implement an authentication function for an accessing electronic part.

It should be further understood that, in the following embodiments, a vehicle is used as an example to describe in detail an authentication method for an electronic part provided in embodiments of this application. However, this should not be construed as any limitation for embodiments of this application. The method provided in embodiments of this application may also be applicable to another terminal, like an airplane or a mobile phone. When the vehicle in the following embodiments is replaced with another terminal, the authentication platform may be a platform deployed in the another terminal. In addition, the authentication platform is merely an example name, or may have another name, provided that the authentication method provided in embodiments of this application can be implemented. This is not limited in embodiments of this application.

It should be further understood that the authentication platform may alternatively be a platform that is deployed on a cloud and that is configured to perform authentication on an electronic part. When the authentication platform is deployed on the cloud, the following solution may also be considered as being executed by a cloud server.

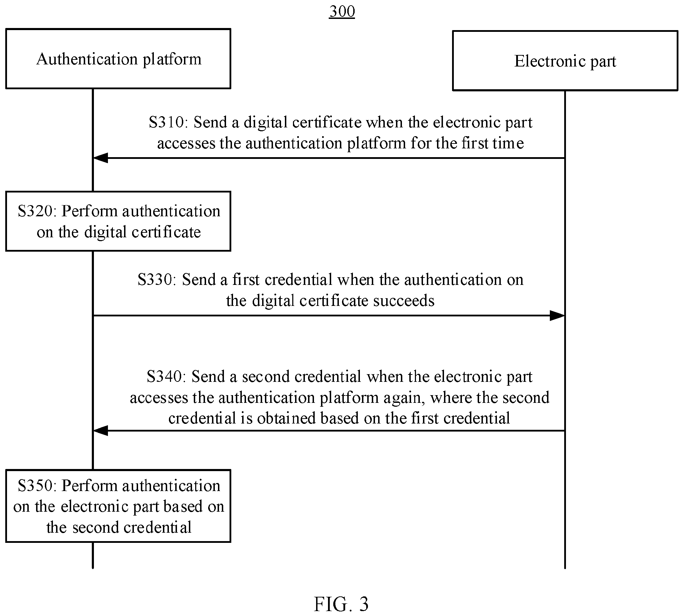

FIG. 3 is a schematic flowchart of an authentication method 300 for an electronic part according to an embodiment of this application. The method 300 shown in FIG. 3 may include S310 to S350. The following describes each step in FIG. 3 in detail.

S310: An electronic part sends a digital certificate to an authentication platform when the electronic part accesses the authentication platform for the first time.

The authentication platform is specifically a platform configured to perform authentication on an electronic part of a vehicle, and the authentication platform may be deployed in the vehicle, for example, the VIU or the VDC shown in FIG. 2. The electronic part is an electronic part that needs to be authenticated and that accesses the vehicle, for example, the MCU or the BMS shown in FIG. 2.

Optionally, the digital certificate may be preset in the electronic part, or the digital certificate is generated by the electronic part based on a digital signature obtained from a PKI server.

It may be understood that the electronic part may prestore a digital certificate, or may generate a digital certificate with a digital signature after obtaining the digital signature from the PKI server. This is not limited in embodiments of this application. The digital certificate may be used by the authentication platform to perform authentication on an electronic part that accesses the vehicle for the first time.

That the electronic part accesses the authentication platform for the first time means that the electronic part gets first access to the authentication platform. For example, if the electronic part is replaced by another, the another electronic part is one that gets access to the authentication platform for the first time. The electronic part sends an access request message to the authentication platform. The authentication platform detects whether the electronic part accesses the authentication platform for the first time. If it is detected that the electronic part accesses the authentication platform for the first time, the authentication platform may request a digital certificate from the electronic part, and perform digital certificate authentication on the electronic part.

For example, when the electronic part accesses the authentication platform for the first time, the electronic part may send a digital certificate to the authentication platform, so that the authentication platform performs authentication on the electronic part.

S320: The authentication platform performs authentication on the digital certificate.

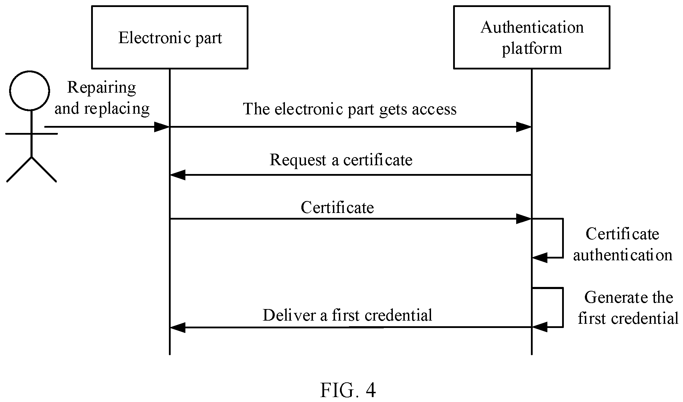

After receiving the digital certificate, the authentication platform performs authentication on the digital certificate. It should be understood that the digital certificate includes the digital signature, and that the authentication platform performs authentication on the digital certificate may include, for example, performing authentication on a certificate SN of the digital certificate, and performing authentication on the digital signature in the digital certificate. If the authentication performed by the authentication platform on the digital certificate of the electronic part fails, the authentication on the electronic part fails. If the authentication performed by the authentication platform on the digital certificate of the electronic part succeeds, the authentication on the electronic part succeeds. The following describes a specific authentication process in detail with reference to FIG. 4.

FIG. 4 is a schematic diagram of a specific process in which the authentication platform performs authentication on the electronic part that gets access for the first time according to an embodiment of this application.

As shown in FIG. 4, when an electronic part accesses the authentication platform for the first time during vehicle repairing and replacing, a digital certificate of the electronic part needs to be authenticated. Specifically, first, the authentication platform requests the digital certificate (referred to as a certificate in the figure) from the electronic part, and the electronic part sends the digital certificate to the authentication platform, so that the authentication platform performs authentication on the digital certificate. It should be understood that for a specific process in which the authentication platform requests the digital certificate and performs authentication on the digital certificate, refer to the conventional technology. For brevity, details are not described herein again.

If the authentication on the digital certificate fails, the authentication on the electronic part fails, and the electronic part cannot be used.

If the authentication on the digital certificate succeeds, the authentication on the electronic part succeeds, and the electronic part can be used.

It should be understood that, in a process in which the authentication platform performs authentication on the digital certificate of the electronic part, the authentication platform may negotiate with the electronic part about an SK, and the SK may perform encryption and decryption on data. For example, when the authentication succeeds, further, the authentication platform may encrypt, by using the SK, an identity used to identify the electronic part and a first key used to encrypt and decrypt the identity, to generate a first credential, and send the first credential to the electronic part, so that authentication is performed on the electronic part when the electronic part accesses the authentication platform again.

S330: The authentication platform sends the first credential when the authentication on the digital certificate succeeds.

When the authentication platform successfully performs authentication on the digital certificate of the electronic part, the authentication platform sends the first credential to the electronic part. The first credential may be used to generate a second credential, so that when the electronic part accesses the authentication platform again, the second credential is used to perform authentication. When the electronic part accesses the authentication platform again, the authentication platform does not need to perform authentication on the digital certificate again, and may perform authentication on the electronic part based on the second credential. The second credential is obtained by the electronic part based on the first credential. Compared with that of the authentication based on the digital certificate, a process of performing authentication on the second credential by the authentication platform is relatively simple and consumes relatively short time. This helps the authentication platform quickly complete authentication on the electronic part.

The first credential may include an encrypted second credential, for example, include an encrypted identity and an encrypted first key that are encrypted by using the SK. The identity is used to identify the electronic part, and the first key is used to encrypt the identity.

A key used to encrypt the identity and the first key may be negotiated in a process of performing key exchange with the electronic part when the authentication platform successfully performs authentication on the digital certificate of the electronic part. For example, in the authentication process of first access shown in FIG. 4, when the authentication platform successfully performs authentication on the digital certificate, the authentication platform negotiates with the electronic part about the SK by using a key agreement algorithm.

In a possible design, the first credential is obtained by encrypting the identity and the first key, the identity is used to identify the electronic part, the first key is used to encrypt the identity, and the second credential includes the encrypted identity obtained by encrypting the identity based on the first key.

A specific process is as follows.

The electronic part first obtains the identity and the first key. Corresponding to S330, after receiving the first credential, the electronic part decrypts the first credential by using the SK, to obtain the identity and the first key, and locally stores the identity and the first key.

Optionally, the identity includes a token. The token includes a DID of the electronic part and a certificate SN of the digital certificate. The first key may be used to encrypt the token.

In a possible implementation, when the authentication on the digital certificate of the electronic part succeeds, the authentication platform may sign the token based on a private key of the VIU, to obtain a signed token, and then encrypt the signed token and the first key based on the SK, to obtain the first credential. In other words, the first credential includes an encrypted token and the encrypted first key. After receiving the first credential, the electronic part may decrypt the first credential by using the SK, to obtain the signed token and the first key, and then perform signature authentication on the signed token by using a public key of the VIU, to obtain the token. The electronic part may locally store the token and the first key.

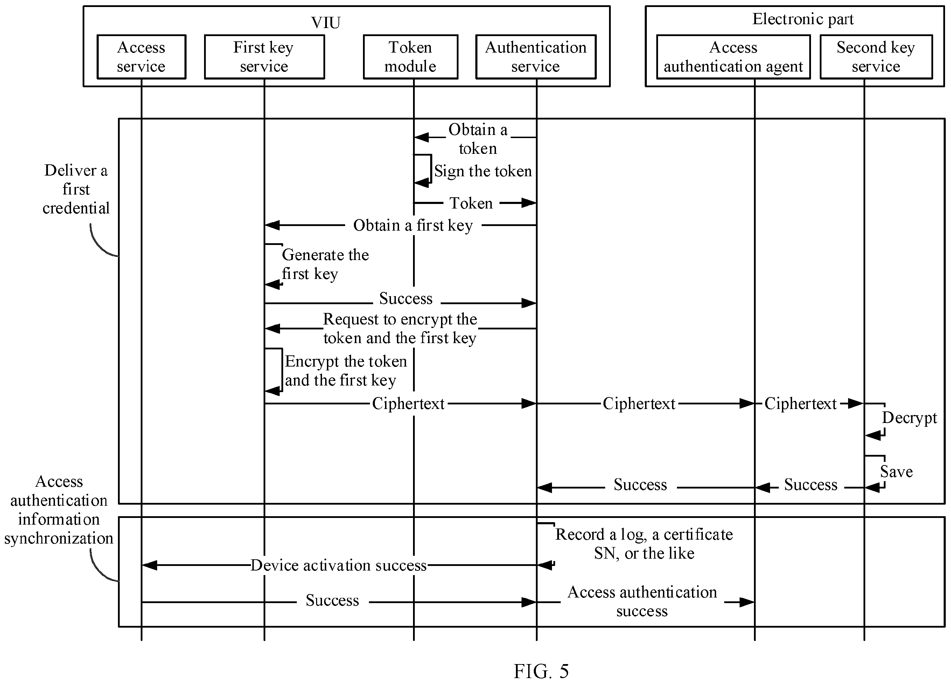

The following describes in detail a specific process in which the authentication platform delivers the first credential with reference to FIG. 5. As shown in FIG. 5, an example in which the authentication platform is the VIU is used. The VIU includes an access service, a first key service, a token module, and an authentication service. The electronic part includes an access authentication agent and a second key service. The token module is a function module in the VIU and is used to generate a token and sign the token. It should be understood that the token module is merely an example, or may be another function module that implements the function, and the function module may be named in another naming manner. This is not limited in embodiments of this application.

The authentication service sends a message of "Obtain a token" to the token module. The token module uses a private key to sign the token and sends a signed token to the authentication service. The authentication service further sends a message of "Obtain a first key" to the first key service, and the first key service generates the first key and sends a message of "Success" to the authentication service. The authentication service sends a message of "Request to encrypt the token and the first key". The first key service encrypts the token and the first key by using the negotiated SK, to obtain the first credential, and sends the first credential to the second key service. After receiving the first credential, the second key service decrypts the first credential by using the SK to obtain the token and the first key, stores the token and the first key, and sends a "Success" message to the authentication service. The authentication service records a log, the DID, the SN of the certificate, time, vehicle identification code (vehicle identification number, VIN), and the like, and sends a message of "A device is activated successfully" to the access service. The access service sends a message of "Succeed" to the authentication service, and the authentication service further sends the message of "Access authentication success" to the access authentication agent. In this way, when the activation succeeds when the electronic part accesses the authentication platform for the first time, a function of the electronic part can be enabled.

Optionally, the identity includes the certificate SN, and the first key may be used to encrypt the certificate SN.

In a possible implementation, when the authentication on the digital certificate of the electronic part succeeds, the authentication platform may encrypt the certificate SN and the first key by using the SK, to obtain the first credential. In other words, the first credential includes an encrypted certificate SN and an encrypted first key. A specific process in which the authentication platform delivers the first credential is similar to the process in which the authentication platform delivers the token and the first key in FIG. 5. For details, refer to related descriptions in FIG. 5. For brevity, details are not described herein again.

It can be learned that, in the foregoing two implementations, the authentication platform needs to generate the first key, and send the first key to the electronic part. When a plurality of electronic parts access the authentication platform, the first key may correspond to the authentication platform, or may correspond to the electronic part.

Optionally, the first key corresponds to the authentication platform, and first keys allocated by a same authentication platform to different electronic parts are a same first key. That is, each VIU has only one first key, and all electronic parts accessing the VIU share one first key. This may save some storage space.

Optionally, the first key corresponds to the electronic part, and first keys allocated by a same authentication platform to different electronic parts are different first keys. In other words, each VIU may manage and control a plurality of electronic parts, the VIU has a plurality of first keys, and each electronic part accessing the VIU corresponds to one first key.

S340: Send the second credential to the authentication platform when the electronic part accesses the authentication platform again, where the second credential is obtained based on the first credential.

That the electronic part accesses the authentication platform again refers to a situation where the vehicle is started again. When the electronic part is started again, an access request message is sent to the authentication platform. The authentication platform detects whether the electronic part gets access for the first time. If the electronic part does not get access for the first time, the authentication platform performs authentication on the electronic part based on the second credential. It may be understood that when the vehicle is started again, to reduce authentication time and ensure that the vehicle is quickly started, the authentication platform does not need to perform authentication on the digital certificate again, and only needs to perform authentication on the second credential.

When the electronic part accesses the authentication platform again, the second credential is sent to the authentication platform, so that the authentication platform completes authentication. The second credential may be the encrypted identity obtained by encrypting the identity based on the first key.

In a possible case, the first credential delivered by the authentication platform includes the encrypted first key and the token, that is, the identity is the token. When the electronic part gets access again, the first key may be used to encrypt the token, and the encrypted token is sent to the authentication platform, so that the authentication platform performs authentication on the electronic part.

In another possible case, the first credential delivered by the authentication platform includes the encrypted first key and the encrypted certificate SN, that is, the identity is the certificate SN. When the electronic part gets access again, the first key is used to encrypt the certificate SN, and the encrypted certificate SN is sent to the authentication platform.

It should be understood that the first key may be used to encrypt and decrypt the identity when the electronic part gets access again, to generate the second credential, so as to avoid performing authentication again on the digital certificate of the electronic part. Therefore, the first key may be referred to as a keepalive key (Alivekey).

S350: The authentication platform performs authentication on the electronic part based on the second credential.

The authentication platform receives the second credential, for example, the encrypted identity, from the electronic part, may decrypt the encrypted identity by using the first key, to obtain the identity, and then perform authentication on the electronic part based on the identity obtained through decryption and the locally stored identity. If the identity obtained through decryption is the same as the locally stored identity, the authentication on the electronic part succeeds, and the electronic part may be enabled. If the identity obtained through decryption is different from the locally stored identity, the authentication on the electronic part fails, and the electronic part is prohibited enabling.

The enabling the electronic part may be understood as starting the electronic part. In other words, the electronic part may receive or send a signal in an enabled state, to implement a corresponding function of the electronic part. In a disabled state, the electronic part cannot receive or send a signal, that is, the electronic part cannot be started, and therefore cannot implement a corresponding function. For example, when the authentication on the electronic part succeeds, the electronic part may be enabled, that is, the electronic part may be started, to implement a corresponding function of the electronic part. When the authentication on the electronic part fails, the electronic part is prohibited enabling, that is, the electronic part cannot be started, that is, a corresponding function of the electronic part cannot be implemented.

As described above, the identity includes the token or the certificate SN. If the identity obtained by the authentication platform from the electronic part is the token, the authentication platform may update the token when the authentication on the electronic part succeeds, to obtain an updated token, and deliver the updated token to the electronic part. The updated token may be used to perform authentication on the electronic part when the electronic part accesses the authentication platform next time.

The following describes in detail a specific process in which an authentication platform performs authentication on an electronic part by using an example in which an identity is a token.

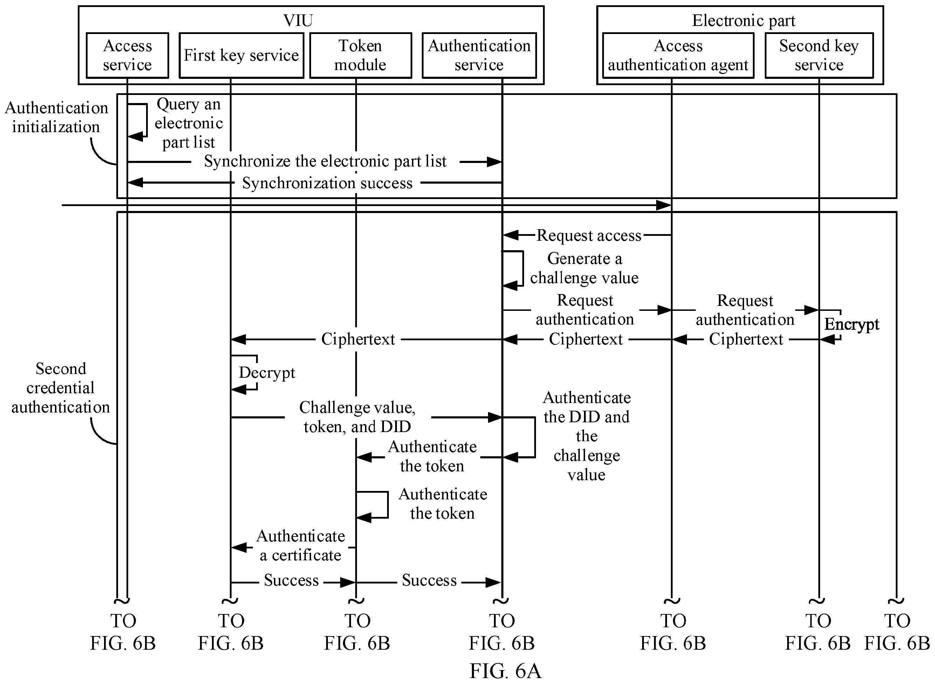

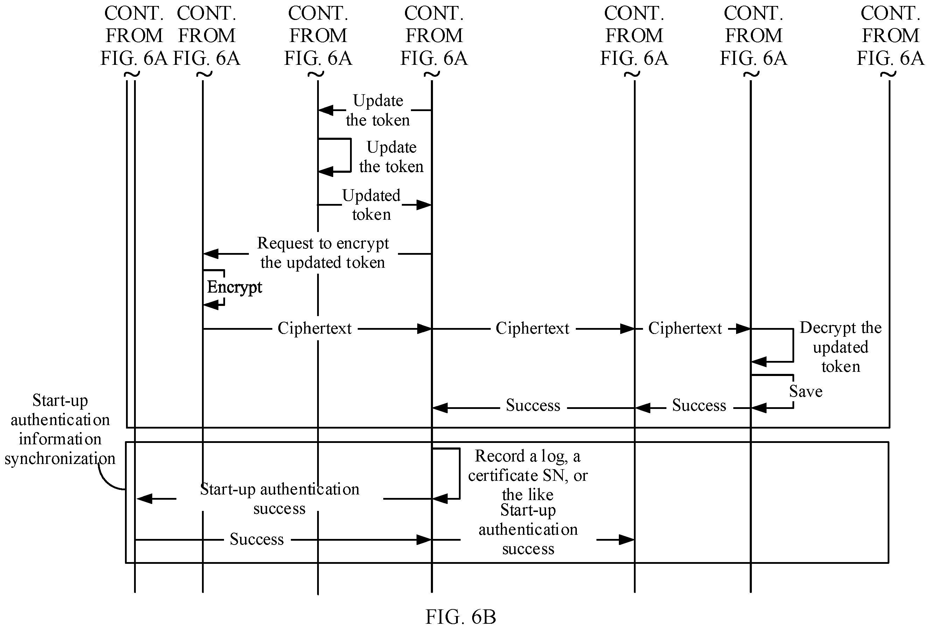

FIG. 6A and FIG. 6B are a specific schematic flowchart of performing authentication on a second credential according to an embodiment of this application. The following describes in detail a specific process of performing authentication on the second credential of the electronic part by the authentication platform with reference to FIG. 6A and FIG. 6B.

As shown in FIG. 6A and FIG. 6B, the authentication platform uses a VIU as an example. The VIU includes an access service, a first key service, a token module, and an authentication service. The electronic part includes an access authentication agent and a second key service. The following provides description from a perspective of interaction between services.

It should be understood that the access service, the first key service, the token module, the authentication service, the access authentication agent, and the second key service shown in FIG. 6A and FIG. 6B are merely an example, or may be interaction of another function module that implements the foregoing function. This is not limited in embodiments of this application.

As shown in FIG. 6A and FIG. 6B, first, the VIU performs authentication initialization. Specifically, the access service queries an electronic part list, that is, determines an electronic part that needs to be authenticated during access, and synchronizes the electronic part list to be authenticated to the authentication service of the VIU. Correspondingly, the authentication service returns a "Synchronization success" message to the access service.

When the electronic part accesses the authentication platform, the access authentication agent sends a "Request access" message to the authentication service, and the authentication service generates a challenge value, and sends a "Request authentication" message to the second key service. The message carries the challenge value generated by the authentication service. The second key service encrypts the challenge value, the token, and the DID by using the first key, and sends ciphertext to the first key service. The first key service decrypts the ciphertext by using the first key. A decrypted challenge value, token, and DID are sent to the authentication service. The authentication service first performs authentication on the DID and the challenge value, for example, compares the DID with a locally stored DID, and compares the decrypted challenge value with the challenge value generated by the authentication service. Further, the authentication service sends a message of "Request to authenticate the token" to the token module. The message carries the decrypted token. The token module authenticates the token, sends a certificate SN to the first key service, and further determines whether a digital certificate is revoked. After determining that the digital certificate is not revoked, the first key service sends a "Success" message to the authentication service. It should be understood that a PKI server sends a revoked digital certificate to the VIU, and the first key service compares the certificate SN of the digital certificate with a certificate SN of the revoked digital certificate, to determine whether the digital certificate is revoked.

After receiving the authentication success message, the authentication service sends a request of "Update the token" to the token module. The token module updates the token, so that the electronic part can be authenticated when accessing the authentication platform next time. The token module sends the updated token to the authentication service, and the authentication service sends a "Request for encryption" message to the first key service. The message carries the updated token. The first key service encrypts the updated token by using the first key, and sends the ciphertext to the second key service. The second key service decrypts the updated token by using the first key, saves the updated token, and sends a "Success" message to the authentication service.

Finally, start-up authentication information synchronization is performed. Specifically, the authentication service records the log, the VIN, the DID, the certificate SN, and the time, and sends a message of "Start-up authentication success" to the access service. The access service sends a "Success" message to the authentication service, and the authentication service sends the "Start-up authentication success" message to the access authentication agent. In this way, the authentication platform completes authentication on the second credential of the electronic part.

Further, the authentication platform may perform continuous authentication on the second credential of the electronic part. It should be understood that, after a vehicle is started, the authentication platform performs start-up authentication on the electronic part. The starting of the vehicle means that the vehicle is ignited and an engine is started. When the vehicle stops and is not in a break-down state, the authentication platform may perform continuous authentication on the electronic part. Continuous authentication may further prevent the electronic part from being replaced during hot swap in a parking phase, that is, prevent the electronic part from being replaced when the vehicle is stopped but not shut down. A process of continuous authentication is basically the same as a process of start-up authentication, and a difference lies in that a token does not need to be updated during continuous authentication. For brevity, the process of continuous authentication is not described in detail herein. For a specific process, refer to the foregoing description of start-up authentication.

It should be noted that, in a process of performing continuous authentication on the electronic part, the authentication platform may further improve determining of vehicle safety. For example, if the authentication platform fails to perform authentication on the electronic part when the vehicle is running normally, the electronic part needs to be prohibited enabling after safe parking is ensured.

If the authentication platform receives the second credential, which is an identity, the certificate SN to be specific, obtained through encryption by using the first key, after the electronic part requests access, the authentication platform generates the challenge value and sends the challenge value to the electronic part. The electronic part encrypts the challenge value and the certificate SN by using the first key, and sends the encrypted challenge value and the encrypted certificate SN to the authentication platform. The authentication platform performs decryption by using the first key, to obtain the certificate SN and the challenge value, and performs authentication on the certificate SN and the challenge value. For a specific verification process, refer to the foregoing description of FIG. 6A and FIG. 6B.

Based on the foregoing technical solution, the authentication platform may deliver the first credential to the electronic part after the electronic part gets access for the first time and completes authentication, so as to obtain the second credential. When the electronic part accesses the authentication platform again, digital certificate authentication does not need to be performed on the electronic part again, but is replaced by the authentication on the second credential. If the first credential is the identity and the first key, and the second credential is an encrypted identity obtained by encrypting the identity by using the first key, when the electronic part accesses the electronic part again, the authentication on the second credential is authentication on the identity. It can be seen that, compared with that of the authentication based on the digital certificate, an authentication process of the identity is greatly simplified. This can shorten authentication time and improve authentication efficiency. In addition, in an authentication process of the electronic part, only encryption and decryption need to be performed, and excessive calculation does not need to be performed, and the process may be completed through hardware acceleration, so that it is possible to enable the electronic part when the electronic part is quickly authenticated and the authentication succeeds.

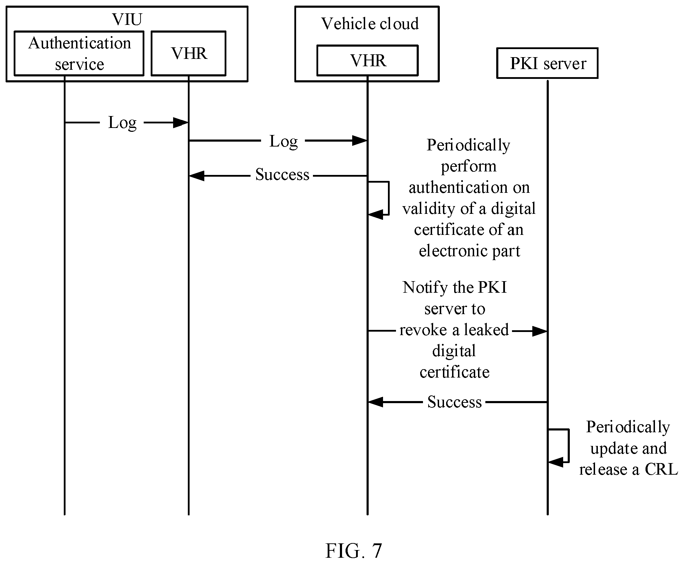

FIG. 7 is a schematic flowchart of determining whether a digital certificate is revoked according to an embodiment of this application. As shown in FIG. 7, an authentication platform uses a VIU as an example, and the VIU includes an authentication service and a vehicle history report (vehicle history report, VHR). The following describes a specific process of determining whether the digital certificate is revoked from a perspective of interaction between an authentication service, a VHR, a vehicle cloud, and a PKI server.

As shown in FIG. 7, the VHR of the VIU obtains a log from the authentication service and sends the log to the VHR of the vehicle cloud, and the vehicle cloud returns a "Success" message. Further, the VHR of the vehicle cloud periodically performs authentication on validity of the digital certificate of the electronic part, and determines whether the digital certificate is leaked. For example, whether the digital certificate is revoked may be determined based on a time period of a certificate SN, that is, a use time period of the certificate SN. The time period of the certificate SN is calculated from time when the authentication platform performs authentication on the digital certificate to time when the electronic part is last used.

In a possible design, the revoked digital certificates include a plurality of digital certificates that have a same certificate serial number and that have at least partially overlapped use time. For example, when an electronic part accesses the authentication platform for the first time, authentication on a digital certificate needs to be performed, and a time period of a certificate SN of the digital certificate of the electronic part starts from authentication time. Specifically, in a normal case, a time period of the certificate SN is time 1 to time n, or time n+1 to time 2n. The time 1 to the time n indicate that certificate authentication time of a digital certificate of an electronic part is the time 1, last use time of the electronic part is the time n, and the electronic part is not replaced in the middle; and the time n+1 to the time 2n indicate that an electronic part is changed from one vehicle to another vehicle. In an abnormal case, the time period of the certificate SN is from time i to time m, where 1<i<n.

In a possible implementation, that the authentication platform performs authentication on the digital certificate in the foregoing process includes: determining, based on a certificate serial number of the revoked digital certificate, whether the digital certificate of the electronic part is revoked; and when the digital certificate of the electronic part is revoked, determining that the authentication on the digital certificate of the electronic part fails.

Specifically, the PKI server sends a list of certificates that need to be revoked to the authentication platform, and the authentication platform compares the certificate SN of the digital certificate of the electronic part with certificate SNs in the list of revoked certificates. If the certificate SN is the same as the certificate SNs in the list of revoked certificates, the authentication on the digital certificate fails. The revoked digital certificate is determined based on a check result of a plurality of logs including a log of the electronic part, and each of the plurality of logs includes a certificate serial number of one digital certificate and use time of the certificate serial number.

It may be understood that, if two certificate SNs in the plurality of logs received by the vehicle cloud are the same, and time periods of the certificate SNs overlap, one certificate SN is forged, or both certificate SNs are forged, that is, the digital certificate is leaked. It is determined that the digital certificate corresponding to the certificate SN is a revoked digital certificate. For example, in the logs received by the vehicle cloud, one log shows that a time period of a certificate SN is January 1 to March 1, and another log shows that a time period of the same certificate SN is February 1 to March 12. The two certificates have the same SN and the time periods overlap, indicating that one of the digital certificates is forged, that is, the digital certificate is leaked. After the determining is complete, if a digital certificate is leaked, the VHR of the vehicle cloud may notify the PKI server to revoke the leaked digital certificate. Based on the received notification, the PKI server returns a "Success message" to the VHR of the vehicle cloud, and updates and releases a certificate revocation list (certificate revocation list, CRL). The PKI server further sends the list of revoked digital certificates to the authentication platform. When the authentication platform performs authentication on the certificate SN, authentication on the revoked digital certificate fails.

Based on the foregoing technical solution, the vehicle cloud periodically performs authentication on validity of a digital certificate, notifies the PKI server of a leaked digital certificate, and releases a revoked digital certificate to the authentication platform by using the PKI server, so that when performing authentication on a certificate SN of an electronic part, the authentication platform can query, by using the certificate SN, whether a current certificate is revoked, thereby preventing the digital certificate from being forged, and effectively performing ecological control on the electronic part.

It should be understood that the embodiment shown in FIG. 3 and the embodiment shown in FIG. 7 described above may be used in combination or separately. When the two embodiments are used in combination, authentication time can be shortened, a vehicle can be quickly started, user experience can be improved, and a digital certificate can be prevented from being forged, so that ecological control can be effectively performed on an electronic part.

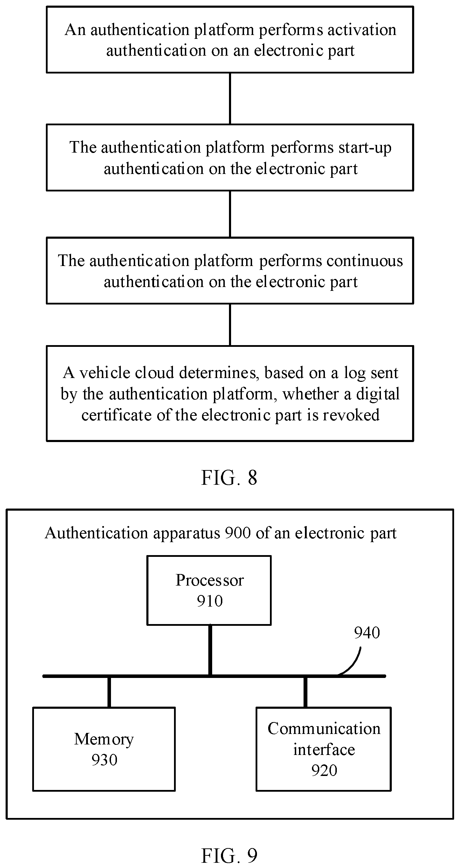

FIG. 8 is a schematic diagram of an example of an authentication method for an electronic part according to an embodiment of this application. With reference to the method, the following describes in detail a specific process used in combination with the embodiment shown in FIG. 3 and the embodiment shown in FIG. 7.

As shown in FIG. 8, first, an authentication platform performs activation authentication on an electronic part. During a repairing and replacing process, the electronic part accesses the authentication platform for the first time, and the electronic part is activated and authenticated. For example, the digital certificate of the electronic part is authenticated as described above, and a first credential is delivered when the authentication succeeds. For a specific authentication process, refer to related descriptions in FIG. 4 and FIG. 5. Details are not described herein again.

Then, the authentication platform performs start-up authentication on the electronic part. When a vehicle is started again, that is, when the electronic part accesses the authentication platform again, the authentication platform performs start-up authentication on the electronic part, that is, performs authentication on the electronic part by using a second credential. For a specific process, refer to related descriptions in FIG. 6A and FIG. 6B. Moreover, the authentication platform performs continuous authentication on the electronic part, and a token does not need to be updated during the continuous authentication. Other steps are the same as those in the start-up authentication process. Therefore, when the vehicle is started again, authentication on the digital certificate does not need to be performed, and only authentication on the second credential needs to be performed. However, an authentication process of the second credential is relatively simple, and authentication time is quite short. Therefore, the vehicle can be quickly started, thereby improving user experience.

Finally, the vehicle cloud determines whether the digital certificate of the electronic part needs to be revoked based on a log sent by the authentication platform. The vehicle cloud determines whether the certificate needs to be revoked based on a log uploaded by the authentication platform. The log includes a certificate SN of the electronic part and use time of the certificate SN. The vehicle cloud determines whether the digital certificate of the electronic part is forged based on the use time of the certificate SN and the certificate SN. Further, an administrator may determine whether the digital certificate needs to be revoked. For example, when a quantity of times that the digital certificate is forged reaches a preset value, the digital certificate needs to be revoked. After the determining is complete, the vehicle cloud sends the certificate SN of the digital certificate to be revoked to the PKI server. The PKI server further sends a list of digital certificates that need to be revoked to the authentication platform. When the authentication platform performs authentication on the certificate SN of the digital certificate, authentication on the revoked digital certificate fails.

Based on the foregoing technical solution, when the electronic part accesses the authentication platform for the first time, the authentication platform performs certificate authentication on the electronic part and delivers the first credential. When the electronic part accesses the authentication platform again, authentication is performed by using only the second credential. The second credential is obtained based on the first credential. An authentication process of the second credential is relatively simple, thereby shortening authentication time, enabling the vehicle to quickly start, and improving user experience. In addition, the vehicle cloud is used to determine whether the digital certificate is forged, thereby avoiding a phenomenon of shoddy goods replacing for quality goods, and effectively performing ecological control on the electronic part.

FIG. 9 is a schematic block diagram of an authentication apparatus 900 of an electronic part according to an embodiment of this application. The apparatus 900 may be a chip system, or may be an apparatus configured with a chip system to implement an authentication function of the electronic part in the foregoing method embodiment. In this embodiment of this application, the chip system may include a chip, or may include a chip and another discrete component.

As shown in FIG. 9, the apparatus 900 may include a processor 910 and a communication interface 920. The communication interface 920 is configured to communicate with another device through a transmission medium, so that an apparatus in the apparatus 900 can communicate with the another device. The communication interface 920 may be, for example, a transceiver, an interface, a bus, a circuit, or an apparatus that can implement a receiving and sending function. The processor 910 may input and output data through the communication interface 920, and is configured to implement the authentication method for an electronic part in the embodiments corresponding to FIG. 3 to FIG. 8. Specifically, the apparatus 900 may be configured to implement a function of the authentication platform or a function of the electronic part in the foregoing method embodiment.

For example, if the apparatus 900 corresponds to a terminal, and is configured to implement a function of the authentication platform in the method provided in embodiments of this application, the processor 910 may be configured to: obtain a digital certificate from an electronic part when it is detected that the electronic part gets access for the first time; perform authentication on the digital certificate; send a first credential to the electronic part when the authentication on the digital certificate succeeds, where the first credential includes an encrypted second credential; obtain the second credential from the electronic part when it is detected that the electronic part gets access again, where the second credential is obtained based on the first credential; and perform authentication on the electronic part based on the second credential.

For example, if the apparatus 900 corresponds to an electronic part, and is configured to implement a function of the electronic part in the method provided in embodiments of this application, the processor 910 may be configured to: send a digital certificate to a terminal when the terminal is accessed for the first time; receive a first credential from the terminal; and send a second credential to the terminal when the terminal is accessed again, where the second credential is obtained based on the first credential.

Optionally, the apparatus 900 further includes at least one memory 930, configured to store program instructions and/or data. The memory 930 is coupled to the processor 910. The coupling in this embodiment of this application may be an indirect coupling or a communication connection between apparatuses, units, or modules in an electrical form, a mechanical form, or another form, and is used for information exchange between the apparatuses, the units, or the modules. The processor 910 may operate in collaboration with the memory 930. The processor 910 may execute the program instructions stored in the memory 930. At least one of the at least one memory may be included in the processor.

A specific connection medium between the processor 910, the communication interface 920, and the memory 930 is not limited in embodiments of this application. In this embodiment of this application, in FIG. 9, the processor 910, the communication interface 920, and the memory 930 are connected through a bus 940. The bus 940 is represented by a thick line in FIG. 9, and a connection manner between other components is merely described as an example, and is not limited thereto. The bus may be classified into an address bus, a data bus, a control bus, and the like. For ease of indication, the bus is indicated by using only one thick line in FIG. 9. However, it does not indicate that there is only one bus or only one type of bus.

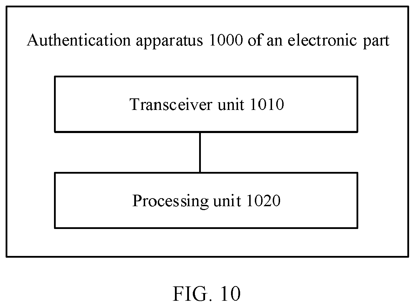

FIG. 10 is another schematic block diagram of an authentication apparatus 1000 of an electronic part according to an embodiment of this application. As shown in FIG. 10, the apparatus 1000 may include: a transceiver unit 1010 and a processing unit 1020.

Optionally, the apparatus 1000 may correspond to the terminal in the foregoing method embodiment, and is configured to implement a function of an authentication platform. For example, the apparatus 1000 may correspond to the terminal in the foregoing method embodiment, or a component configured in the terminal, like a chip or a chip system. In addition, the units in the apparatus 1000 may be configured to implement corresponding processes performed by the authentication platform in the method shown in FIG. 3 to FIG. 8.

Optionally, the apparatus 1000 may correspond to the electronic part in the foregoing method embodiment. For example, the apparatus 1000 may correspond to the electronic part in the foregoing method embodiment, or a part configured in the electronic part, like a chip or a chip system. In addition, the units in the apparatus 1000 may be configured to implement a corresponding process performed by the electronic part in the method shown in FIG. 3 to FIG. 8.

It should be further understood that the division into units in embodiments of this application is an example, and is merely logical function division. There may be another division manner in actual implementation. In addition, function units in embodiments of this application may be integrated into one processor, or each of the units may exist alone physically, or two or more units are integrated into one unit. The integrated unit may be implemented in a form of hardware, or may be implemented in a form of a software function unit.

This application further provides a computer program product. The computer program product includes a computer program (which may also be referred to as code or instructions). When the computer program is run, a computer is enabled to perform the method performed by the authentication platform or the electronic part in the embodiments shown in FIG. 3 to FIG. 8.

This application further provides a computer-readable storage medium. The computer-readable storage medium stores a computer program (which may also be referred to as code or instructions). When the computer program is run, the computer is enabled to perform the method performed by the authentication platform or the electronic part in the embodiments shown in FIG. 3 to FIG. 8.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It can be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

The terms such as "unit" and "module" used in this specification may be used to indicate computer-related entities, hardware, firmware, combinations of hardware and software, software, or software being executed.

A person of ordinary skill in the art may be aware that illustrative logical blocks (illustrative logical blocks) described in embodiments disclosed in this specification and steps (steps) can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division and may be other division during implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. All or a part of the units may be selected based on actual requirements to achieve the objectives of the solutions of embodiments.

In addition, function units in embodiments of this application may be integrated into one processing unit, each of the units may exist alone physically, or two or more units are integrated into one unit.

In the foregoing embodiments, all or some functions of the function units may be implemented by using software, hardware, firmware, or any combination thereof. When software is used to implement embodiments, all or some of the foregoing embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid state disk (solid state disk, SSD)), or the like.

When the functions are implemented in the form of a software function unit and sold or used as an independent product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method for an electronic part, comprising:
obtaining a digital certificate from an electronic part when it is detected that the electronic part gets access for the first time;
performing authentication on the digital certificate;
sending a first credential to the electronic part when the authentication on the digital certificate succeeds, wherein the first credential comprises an encrypted second credential;
obtaining the second credential from the electronic part when it is detected that the electronic part gets access again, wherein the second credential is obtained based on the first credential; and
performing authentication on the electronic part based on the second credential.

2. The method according to claim 1, wherein the first credential is obtained by encrypting an identity and a first key, the identity is used to identify the electronic part, and the first key is used to encrypt the identity; and
the second credential comprises an encrypted identity obtained by encrypting the identity based on the first key.

3. The method according to claim 2, wherein the performing authentication on the electronic part based on the second credential comprises:
decrypting the encrypted identity by using the first key, to obtain the identity;
performing authentication on the electronic part based on the identity obtained through decryption and a locally stored identity; and
enabling the electronic part when the authentication on the electronic part succeeds; or
prohibiting enabling the electronic part when the authentication on the electronic part fails.

4. The method according to claim 2 or 3, wherein the identity comprises a token or a certificate serial number of the digital certificate.

5. The method according to claim 4, wherein the token comprises a decentralized identity DID and the certificate serial number of the digital certificate.

6. The method according to claim 4 or 5, wherein the identity comprises the token; and
the method further comprises:
when the authentication on the electronic part succeeds, updating the token to obtain an updated token, wherein the updated token is used to perform authentication on the electronic part when the electronic part gets access next time;
encrypting the updated token by using the first key, to obtain an encrypted updated token; and
sending the encrypted updated token to the electronic part.

7. The method according to any one of claims 2 to 6, wherein the method is applied to a terminal, the first key corresponds to the terminal, and first keys allocated by a same terminal to different electronic parts are a same first key.

8. The method according to any one of claims 2 to 6, wherein the method is applied to a terminal, the first key corresponds to the electronic part, and first keys allocated by a same terminal to different electronic parts are different first keys.

9. The method according to any one of claims 2 to 8, wherein the sending a first credential to the electronic part when the authentication on the digital certificate succeeds comprises:
negotiating with the electronic part about a session key SK when the authentication on the digital certificate succeeds, wherein the SK is used for encryption and decryption of data transmission;
encrypting, based on the SK, an identity and a first key allocated to the electronic part, to obtain the first credential; and
sending the first credential to the electronic part.

10. The method according to any one of claims 1 to 9, wherein the performing authentication on the digital certificate comprises:
determining, based on a certificate serial number of a revoked digital certificate, whether the digital certificate of the electronic part is revoked; and
when the digital certificate of the electronic part is revoked, determining that the authentication on the digital certificate of the electronic part fails, wherein
the certificate serial number of the revoked digital certificate comes from a public key infrastructure PKI server, the revoked digital certificate is determined based on a check result of a plurality of logs comprising a log of the electronic part, and each of the plurality of logs comprises a certificate serial number of one digital certificate and use time of the certificate serial number.

11. The method according to claim 10, wherein the revoked digital certificate comprises a plurality of digital certificates that have a same certificate serial number and have at least partially overlapped use time.

12. The method according to any one of claims 1 to 11, wherein the digital certificate is preset in the electronic part, or the digital certificate is generated by the electronic part based on a digital signature obtained from the PKI server.

13. An authentication method for an electronic part, comprising:
sending a digital certificate to a terminal when the terminal is accessed for the first time;
receiving a first credential from the terminal, wherein the first credential comprises an encrypted second credential; and
sending the second credential to the terminal when the terminal is accessed again, wherein the second credential is obtained based on the first credential.

14. The method according to claim 13, wherein the first credential is obtained by encrypting an identity and a first key, the identity is used to identify an electronic part, and the first key is used to encrypt the identity; and
the second credential comprises an encrypted identity obtained by encrypting the identity based on the first key.

15. The method according to claim 14, wherein the sending the second credential to the terminal when the terminal is accessed again comprises:
decrypting the first credential to obtain the identity and the first key;
encrypting the identity by using the first key, to obtain the encrypted identity; and
sending the encrypted identity, wherein the encrypted identity is used by the terminal to perform authentication on the electronic part.

16. The method according to claim 15, wherein the decrypting the first credential to obtain the identity and the first key comprises:
negotiating with the terminal about a session key SK, wherein the SK is used for encryption and decryption of data transmission; and
decrypting the first credential based on the SK, to obtain the identity and the first key.

17. The method according to any one of claims 14 to 16, wherein the identity comprises a token or a certificate serial number of the digital certificate.

18. The method according to claim 17, wherein the token comprises a decentralized identity DID and the certificate serial number of the digital certificate.

19. The method according to claim 17 or 18, wherein the identity comprises the token, and
the method further comprises:
receiving an encrypted updated token from the terminal, wherein the encrypted updated token is obtained by encrypting an updated token based on the first key, and the updated token is used by the terminal to perform authentication on the electronic part when the terminal is accessed next time; and
decrypting the encrypted updated token based on the first key, to obtain the updated token.

20. The method according to any one of claims 13 to 19, wherein the digital certificate is preset in the electronic part, or the digital certificate is generated by the electronic part based on a digital signature obtained from a PKI server.

21. A terminal, comprising:
a transceiver unit, configured to obtain a digital certificate from an electronic part when it is detected that the electronic part gets access for the first time; and
a processing unit, configured to perform authentication on the digital certificate, wherein
the transceiver unit is further configured to send a first credential to the electronic part when the authentication on the digital certificate succeeds, wherein the first credential comprises an encrypted second credential;
the transceiver unit is further configured to: obtain the second credential from the electronic part when it is detected that the electronic part gets access again, wherein the second credential is obtained based on the first credential; and
the processing unit is further configured to perform authentication on the electronic part based on the second credential.

22. The terminal according to claim 21, wherein the first credential is obtained by encrypting an identity and a first key, the identity is used to identify the electronic part, and the first key is used to encrypt the identity; and
the second credential comprises an encrypted identity obtained by encrypting the identity based on the first key.

23. The terminal according to claim 22, wherein the processing unit is specifically configured to:
decrypt the encrypted identity by using the first key, to obtain the identity;
perform authentication on the electronic part based on the identity obtained through decryption and a locally stored identity; and
enable the electronic part when the authentication on the electronic part succeeds; or
prohibit enabling the electronic part when the authentication on the electronic part fails.

24. The terminal according to claim 22 or 23, wherein the identity comprises a token or a certificate serial number of the digital certificate.

25. The terminal according to claim 24, wherein the token comprises a decentralized identity DID and the certificate serial number of the digital certificate.

26. The terminal according to claim 24 or 25, wherein the identity comprises the token; and
the processing unit is further configured to:
when the authentication on the electronic part succeeds, updating the token to obtain an updated token, wherein the updated token is used to perform authentication on the electronic part when the electronic part accesses the terminal next time;
encrypt the updated token by using the first key, to obtain an encrypted updated token; and
send the encrypted updated token to the electronic part.

27. The terminal according to any one of claims 22 to 26, wherein the first key corresponds to the terminal, and first keys allocated by a same terminal to different electronic parts are a same first key.

28. The terminal according to any one of claims 22 to 26, wherein the first key corresponds to the electronic part, and first keys allocated by a same terminal to different electronic parts are different first keys.

29. The terminal according to any one of claims 22 to 28, wherein the processing unit is specifically configured to:
negotiate with the electronic part about a session key SK when the authentication on the digital certificate succeeds, wherein the SK is used for encryption and decryption of data transmission;
encrypt, based on the SK, an identity and a first key allocated to the electronic part, to obtain the first credential; and
send the first credential to the electronic part.

30. The terminal according to any one of claims 21 to 29, wherein the processing unit is specifically configured to:
determine, based on a certificate serial number of a revoked digital certificate, whether the digital certificate of the electronic part is revoked; and
when the digital certificate of the electronic part is revoked, determine that the authentication on the digital certificate of the electronic part fails, wherein
the certificate serial number of the revoked digital certificate comes from a public key infrastructure PKI server, the revoked digital certificate is determined based on a check result of a plurality of logs comprising a log of the electronic part, and each of the plurality of logs comprises a certificate serial number of one digital certificate and use time of the certificate serial number.

31. The terminal according to claim 30, wherein the revoked digital certificate comprises a plurality of digital certificates that have a same certificate serial number and have at least partially overlapped use time.

32. The terminal according to any one of claims 21 to 31, wherein the digital certificate is preset in the electronic part, or the digital certificate is generated by the electronic part based on a digital signature obtained from the PKI server.

33. The terminal according to any one of claims 21 to 32, wherein the terminal is a vehicle.

34. An electronic part, comprising:
a transceiver unit, configured to send a digital certificate to a terminal when the terminal is accessed for the first time, wherein
the transceiver unit is further configured to receive a first credential from the terminal, wherein the first credential comprises an encrypted second credential; and
the transceiver unit is further configured to send the second credential to the terminal when the terminal is accessed again, wherein the second credential is obtained based on the first credential.

35. The electronic part according to claim 34, wherein the first credential is obtained by encrypting an identity and a first key, the identity is used to identify the electronic part, and the first key is used to encrypt the identity; and
the second credential comprises an encrypted identity obtained by encrypting the identity based on the first key.

36. The electronic part according to claim 35, wherein the electronic part further comprises:
a processing unit, configured to decrypt the first credential to obtain the identity and the first key, wherein
the processing unit is further configured to encrypt the identity by using the first key, to obtain an encrypted identity; and
the transceiver unit is specifically configured to send the encrypted identity, wherein the encrypted identity is used by the terminal to perform authentication on the electronic part.

37. The electronic part according to claim 36, wherein the processing unit is specifically configured to:
negotiate with the terminal about a session key SK, wherein the SK is used for encryption and decryption of data transmission; and
decrypt the first credential based on the SK, to obtain the identity and the first key.

38. The electronic part according to any one of claims 35 to 37, wherein the identity comprises a token or a certificate serial number of the digital certificate.

39. The electronic part according to claim 38, wherein the token comprises a decentralized identity DID and the certificate serial number of the digital certificate.

40. The electronic part according to claim 38 or 39, wherein the identity comprises the token; and
the transceiver unit is further configured to receive an encrypted updated token from the terminal, wherein the encrypted updated token is obtained by encrypting an updated token based on the first key, and the updated token is used by the terminal to perform authentication on the electronic part when the electronic part accesses the terminal next time; and
decrypt the encrypted updated token based on the first key, to obtain the updated token.

41. The electronic part according to any one of claims 34 to 40, wherein the digital certificate is preset in the electronic part, or the digital certificate is generated by the electronic part based on a digital signature obtained from a public key infrastructure PKI server.

42. A computer-readable storage medium, comprising a computer program, wherein when the computer program is run on a computer, the computer is enabled to perform the method according to any one of claims 1 to 20.

43. A computer program product, comprising a computer program, wherein when the computer program is run, a computer is enabled to perform the method according to any one of claims 1 to 20.
